# EUROPÄISCHE PATENTANMELDUNG

(11) **EP 4 607 337 A1**
(43) Veröffentlichungstag der Anmeldung: **27.08.2025**
(21) Anmeldenummer: 24159391.2
(22) Anmeldetag: 23.02.2024
(51) Int. Cl.: G06F 8/33, G06F 8/35

(54) **VERFAHREN UND VORRICHTUNG ZUM VERARBEITEN VON DATEN**

(71) Anmelder: Robert Bosch GmbH, 70442 Stuttgart (DE)
(72) Erfinder: Prochus, Tobias, 97753 Karlstadt (DE); Kratz, Petra, 10719 Berlin (DE); Kroehnert, Manfred, 71229 Leonberg (DE)

(57) **Zusammenfassung**

Verfahren zum Verarbeiten von mit einem Datenelement für ein Computerprogramm, beispielsweise für ein Erzeugnis wie z.B. ein Fahrzeug, assoziierten Daten, aufweisend: Ermitteln erster Informationen, die wenigstens eines der folgenden Elemente charakterisieren: a) Größe wenigstens eines mit dem Datenelement assoziierten, beispielsweise atomaren, Datentyps, oder b) Ausrichtung wenigstens eines mit dem Datenelement assoziierten, beispielsweise atomaren, Datentyps, Bereitstellen der ersten Informationen.

## Beschreibung

### Stand der Technik

Die Offenbarung betrifft ein Verfahren zum Verarbeiten von mit einem Datenelement für ein Computerprogramm, beispielsweise für ein Erzeugnis wie z.B. ein Fahrzeug, assoziierten Daten.

Die Offenbarung betrifft eine Vorrichtung zum Verarbeiten von mit einem Datenelement für ein Computerprogramm, beispielsweise für ein Erzeugnis wie z.B. ein Fahrzeug, assoziierten Daten.

### Offenbarung der Erfindung

Manche Beispiele beziehen sich auf ein Verfahren, beispielsweise ein computerimplementiertes Verfahren, zum Verarbeiten von mit einem Datenelement für ein Computerprogramm, beispielsweise für ein Erzeugnis wie z.B. ein Fahrzeug, assoziierten Daten, aufweisend: Ermitteln erster Informationen, die wenigstens eines der folgenden Elemente charakterisieren: a) Größe wenigstens eines mit dem Datenelement assoziierten, beispielsweise atomaren, Datentyps, oder b) Ausrichtung, beispielsweise alignment, wenigstens eines mit dem Datenelement assoziierten, beispielsweise atomaren, Datentyps, Bereitstellen der ersten Informationen. Bei manchen Beispielen ermöglicht dies eine effiziente Serialisierung bzw. Vorbereitung einer Serialisierung von mit dem Datenelement bzw. dem Computerprogramm assoziierten Informationen.

Bei manchen Beispielen bezeichnet der Begriff "Serialisierung" einen Vorgang, bei dem Datenstrukturen oder Objekte in eine sequentielle Form gebracht werden, z.B. um sie für Speicherzwecke und/oder zur Übermittlung nutzbar zu machen. Bei manchen Beispielen ermöglicht eine Serialisierung z.B., auch vergleichsweise komplexe Datenstrukturen, wie sie z.B. in einem Steuergerät oder Fahrzeugrechner (z.B. vehicle computer) auftreten können, in eine eindimensionale Darstellung bzw. Repräsentation zu konvertieren, die sich z.B. für die Archivierung und/oder Übertragung (z.B. zu einem Messsystem für das Fahrzeug), z.B. über wenigstens ein Netzwerk oder eine direkte Datenverbindung, und/oder für das Abspeichern z.B. in einem vorgebbaren Dateiformat, beispielsweise besonders gut, eignet.

Bei manchen Beispielen ist vorgesehen, dass das wenigstens eine Datenelement wenigstens eines der folgenden Elemente aufweist und/oder charakterisiert: a) eine Datenstruktur, oder b) ein Objekt, beispielsweise ein mit einer C++ - Klasse assoziiertes Objekt.

Bei manchen Beispielen ist vorgesehen, dass das Verfahren nicht-invasiv bezüglich eines das Datenelement aufweisenden Codes, beispielsweise Programmcodes, ist. Das bedeutet, dass das Prinzip gemäß der Offenbarung bei manchen Beispielen keine Änderung des Programmcodes erfordert.

b) Es ist kein Meta-Modell erforderlich, z.B. für eine Interpretation des, beispielsweise in Form eines Bytestroms, zu sendenden bzw. gesendeten Datenelements DE, beispielsweise zusammen mit wenigstens einem der folgenden Informationen: c1) erste Informationen, oder c2) zweite Informationen, oder c3) dritte Informationen, oder c4) Binärkode, oder c5) Hashwert, und demzufolge ist eine Auswertung bzw. des Meta-Modells bzw. ein sonstiger mit dem Meta-Modell einhergehender Aufwand entbehrlich.

Bei manchen Beispielen ist besonders vorteilhaft a) das Verfahren, beispielsweise das Prinzip, gemäß der Offenbarung nicht-invasiv bezüglich des Programmcodes, und b) es ist kein Meta-Modell erforderlich, wodurch, z.B. gegenüber konventionellen Ansätzen, der jeweilige entsprechende Aufwand reduziert werden kann.

Bei manchen Beispielen ist vorgesehen, dass das Verfahren aufweist: Ermitteln der ersten Informationen unter Verwendung eines Operators oder Makros eines Compilers, beispielsweise eines C++ - Compilers. Bei manchen Beispielen kann beispielsweise eine "sizeof" Operator oder ein "alignof" Operator verwendet werden.

Bei manchen Beispielen weist das Bereitstellen wenigstens eines der folgenden Elemente auf: a) Speichern, beispielsweise lokales Speichern, der ersten Informationen, beispielsweise in einem Speicher einer Vorrichtung, die zur Ausführung von Aspekten des Verfahrens gemäß den Beispielen ausgebildet ist, beispielsweise für eine zukünftige Verwendung, oder b) Senden der ersten Informationen an wenigstens eine weitere Einrichtung.

Bei manchen Beispielen weist das Verfahren auf: Ermitteln zweiter Informationen, die Aspekte einer mit dem Datenelement assoziierten virtuellen Tabelle ("Vtable") charakterisieren, beispielsweise mittels wenigstens eines "offsetof" Befehls, beispielsweise Compiler Intrinsics und/oder Makros, Bereitstellen der zweiten Informationen, beispielsweise gemeinsam mit den ersten Informationen. Dadurch kann bei manchen Beispielen ein üblicher, beispielsweise marktüblicher, Compiler verwendet werden für das Ermitteln der zweiten Informationen.

Bei manchen Beispielen weist das Bereitstellen wenigstens eines der folgenden Elemente auf: a) Speichern, beispielsweise lokales Speichern, der zweiten Informationen, beispielsweise für eine zukünftige Verwendung, oder b) Senden der zweiten Informationen an wenigstens eine weitere Einrichtung.

Bei manchen Beispielen weist das Verfahren auf: binäres Kodieren wenigstens eines der folgenden Elemente: a) erste Informationen, oder b) zweite Informationen, zu einem Binärkode, beispielsweise einem application binary interface, ABI, Kode, wobei beispielsweise der Binärkode, beispielsweise ABI Kode, 32 bit lang ist, und, optional, Bereitstellen des Binärkodes.

Bei manchen Beispielen können ein oder mehrere, beispielsweise alle, Freiheiten, die ein Compiler hat, z.B., um ein Speicherlayout zu bestimmen, kodiert, beispielsweise binär kodiert, werden, beispielsweise zu dem vorstehend erwähnten ABI Kode.

Bei manchen Beispielen können die genannten Freiheiten des Compilers wenigstens eines der folgenden Elemente aufweisen: a) die ersten Informationen, oder b) die zweiten Informationen, oder c) Größe von einem oder mehreren atomaren Datentypen, oder d) Ausrichtung (z.B. alignement) von einem oder mehreren atomaren Datentypen, oder e) Position einer Vtable, oder f) Tailpadding, z.B. bei Vererbung, g) usw....

Bei manchen Beispielen weist der Binärkode, z.B. ABI Kode, eine andere Länge als das vorstehend genannte Beispiel von 32 bit auf (z.B. länger oder kürzer).

Bei manchen Beispielen weist das Verfahren auf: Ermitteln eines Hashwerts für das Datenelement, beispielsweise mittels einer MD5-Hashfunktion, wobei beispielsweise der Hashwert basierend auf wenigstens einem der folgenden Elemente gebildet wird: a) Member-Typen (z.B. wenigstens eines Klassenmitglieds), oder b) Member-Namen, oder c) Klassen-Name, oder d) Enumeration, e) sonstige Eigenschaften des Datenelements, die beispielsweise angeben, ob ein Datentyp ein Plain Old Data type, POD type, ist oder nicht, beispielsweise ob eine spezielle Ausrichtung mit dem Datentyp assoziiert ist, wobei beispielsweise der Hashwert eine Länge von 16 Bytes aufweist. Bei manchen Beispielen sind andere Längen für den Hashwert als 16 Bytes (z.B. länger oder kürzer) auch möglich.

Bei manchen Beispielen weist das Verfahren auf: Ermitteln dritter Informationen, die beispielsweise mit einer Struktur des Datenelements assoziiert sind, wobei die dritten Informationen wenigstens eines der folgenden Elemente aufweisen: a) Informationen über wenigstens eine Basisklasse, oder b) Informationen über aggregierte Klassen, oder c) Typinformationen, oder d) Informationen über Aufzählungen, oder e) Eigenschaften, beispielsweise assoziiert mit Zugriffsklassifikatoren wie z.B. private, public, oder f) Bezeichner, beispielsweise Namen, von Aufzählungselementen, oder g) Bezeichner, beispielsweise Namen, wenigstens einer Komponente des Datenelements, oder h) Bezeichner, beispielsweise Namen, von Elementen, beispielsweise Mitgliedern, des Datenelements. Bei manchen Beispielen können die dritten Informationen beispielsweise Aspekte einer sog. "Reflection" charakterisieren.

Bei manchen Beispielen können wenigstens manche Informationen, die in den beiden vorstehenden Absätzen als Beispiel für eine Bildung des Hashwerts für das Datenelement und/oder als Beispiel für das Ermitteln der dritten Informationen genannt worden sind sowohl in den Hashwert als auch in eine Reflection einfließen, also z.B. zur Bildung sowohl des Hashwerts als auch der Reflection verwendet werden.

Bei manchen Beispielen weist das Verfahren wenigstens eines der folgenden Elemente auf: a) Lesen des Datenelements, beispielsweise in Form eines byte blob, binary large object, z.B. aus einem Speicher, beispielsweise Arbeitsspeicher, beispielsweise einer mit dem Datenelement assoziierte Informationen verarbeitenden Vorrichtung, beispielsweise Recheneinrichtung, oder b) Kombinieren, beispielsweise Konkatenieren, des Datenelements, mit wenigstens einem der folgenden Informationen: b1) erste Informationen, oder b2) zweite Informationen, oder b3) dritte Informationen, oder b4) Binärkode, oder b5) Hashwert, oder c) Senden des Datenelements, beispielsweise zusammen mit wenigstens einem der folgenden Informationen: c1) erste Informationen, oder c2) zweite Informationen, oder c3) dritte Informationen, oder c4) Binärkode, oder c5) Hashwert, beispielsweise Senden in Form eines Bytestroms. Bei manchen Beispielen charakterisieren die ersten Informationen und/oder die zweiten Informationen und/oder die dritten Informationen und/oder der Binärkode und/oder der Hashwert Informationen, die zur Interpretation wenigstens eines Teils des Datenelements verwendbar sind. Auf diese Weise kann z.B. ein Empfänger des Datenelements, z.B. in Form des byte blob, die durch das Datenelement charakterisierten Informationen auswerten, beispielsweise verarbeiten, beispielsweise plattformübergreifend, also z.B. auch dann, wenn das Datenelement mit einer ersten Plattform, beispielsweise Entwicklungsplattform für Programmcode, assoziiert ist, und der Empfänger bzw. eine Vorrichtung des Empfängers mit einer zweiten Plattform, beispielsweise Entwicklungsplattform für Programmcode, assoziiert ist, die verschieden ist von der ersten Plattform.

Bei manchen Beispielen kann das Senden des Datenelements, beispielsweise zusammen mit wenigstens einem der folgenden Informationen: c1) erste Informationen, oder c2) zweite Informationen, oder c3) dritte Informationen, oder c4) Binärkode, oder c5) Hashwert, beispielsweise Senden in Form eines Bytestroms, beispielsweise unter Verwendung eines Speicherdirektzugriff (z.B. DMA)-Verfahrens ausgeführt werden, wobei eine Recheneinrichtung, beispielsweise Prozessor, vergleichsweise gering bzw. gar nicht belastet wird durch das Senden.

Bei manchen Beispielen können zwei oder mehr der vorstehend genannten Aspekte a) Lesen des Datenelements, b) Kombinieren, c) Senden zeitlich auseinanderfallen und/oder in einer anderen Reihenfolge als der vorstehend als Beispiel genannten Reihenfolge auftreten.

Bei manchen Beispielen wird das Datenelement z.B. nicht mit den genannten Informationen bzw. Aspekten kombiniert und/oder zusammen mit den genannten Informationen bzw. Aspekten gesendet. Bei manchen Beispielen kann ein Datenelement z.B. für sich an einen Empfänger gesendet werden, z.B. ohne die genannten Informationen bzw. Aspekte, und die genannten Informationen bzw. Aspekte können z.B. bereits vor dem Senden des Datenelements an den Empfänger gesendet worden sein oder werden z.B. erst nach dem Senden des Datenelements an dem Empfänger ihrerseits an den Empfänger gesendet. Bei manchen Beispielen kann ein Zeitraum zwischen dem Senden des Datenelements an den Empfänger und dem Senden der genannten Informationen bzw. Aspekte an den Empfänger oder umgekehrt beispielsweise einige Minuten oder Stunden betragen, oder mehrere Tage oder Monate.

Bei manchen Beispielen ist auch vorstellbar, dass zunächst, z.B. dann, wenn ein Computerprogramm verfügbar ist, die Informationen zur Interpretation wenigstens eines Teils des Datenelements an einen Empfänger gesendet werden, damit der Empfänger z.B. vorbereitet ist auf einen zukünftigen Empfang von Datenelementen, z.B. in serialisierter, z.B. blob-Form, und dass zu einem oder mehreren späteren Zeitpunkten jeweilige Datenelemente an den Empfänger gesendet werden, z.B. in serialisierter, z.B. blob-Form. Da der Empfänger bereits zuvor, also beispielsweise vor dem Empfang der z.B. serialisierten Datenelemente, die Informationen zur Interpretation des wenigstens einen Teils des Datenelements empfangen hat, kann er, beispielsweise effizient, beispielsweise bei Empfang, des Datenelements z.B. wenigstens einen Teil des Datenelements entsprechend interpretieren, beispielsweise Auswerten.

Bei manchen Beispielen sind Aspekte der Offenbarung beispielsweise nützlich für eine plattformunabhängige, effiziente Übertragung von Informationen, z.B. Messinformationen, z.B. bezüglich eines Steuergeräts oder Fahrzeugrechners, z.B. für ein Kraftfahrzeug. Bei manchen Beispielen können ein oder mehrere Datenelemente aufgrund der Serialisierung effizient, beispielsweise auch mit vergleichsweise großer Bandbreite, beispielsweise entsprechend einer Datenrate, mit der Daten für die Bildung der Datenelemente auftreten, übertragen werden, beispielsweise von einem Steuergerät oder Fahrzeugrechner zu einem Messsystem.

Manche Beispiele beziehen sich auf ein Verfahren, beispielsweise ein computerimplementiertes Verfahren, zum Verarbeiten von mit einem Datenelement für ein Computerprogramm, beispielsweise für ein Erzeugnis wie z.B. ein Fahrzeug, assoziierten Daten, aufweisend: Empfangen des Datenelements, Empfangen von Informationen zur Interpretation wenigstens eines Teils des Datenelements, und, optional, Auswerten, beispielsweise Interpretieren oder Verarbeiten, des Datenelements basierend wenigstens auf den Informationen. Bei manchen Beispielen ist das Verfahren beispielsweise für ein Messsystem bzw. für eine Vorrichtung für ein Messsystem verwendbar, das Datenelemente von wenigstens einem Erzeugnis gemäß der Offenbarung, beispielsweise in serialisierter Form, empfangen kann.

Bei manchen Beispielen charakterisieren die Informationen zur Interpretation des wenigstens einen Teils des Datenelements wenigstens eines der folgenden Elemente: a) erste Informationen, charakterisierend eine Größe wenigstens eines mit dem Datenelement assoziierten, beispielsweise atomaren, Datentyps, oder eine Ausrichtung wenigstens eines mit dem Datenelement assoziierten, beispielsweise atomaren, Datentyps, oder b) zweite Informationen, die Aspekte einer mit dem Datenelement assoziierten virtuellen Tabelle charakterisieren, oder c) dritte Informationen, die beispielsweise mit einer Struktur des Datenelements assoziiert sind, oder d) einen Binärkode, beispielsweise einen application binary interface Kode, der die ersten Informationen und/oder die zweiten Informationen charakterisiert, oder e) einen Hashwert gebildet basierend auf wenigstens einem der folgenden Elemente: e1) Member-Typen, oder e2) Member-Namen, oder e3) Klassen-Name, oder e4) Enumeration, e5) sonstige Eigenschaften des Datenelements, die beispielsweise angeben, ob ein Datentyp ein Plain Old Data type, POD type, ist oder nicht, beispielsweise ob eine spezielle Ausrichtung mit dem Datentyp assoziiert ist. Bei manchen Beispielen charakterisieren die Informationen zur Interpretation des wenigstens einen Teils des Datenelements wenigstens einen oder mehrere Aspekte einer Reflection.

Bei manchen Beispielen können die vorstehend genannten Aspekte a) Empfangen des wenigstens einen Datenelements, b) Empfangen von Informationen zur Interpretation des wenigstens einen Datenelements zeitlich auseinanderfallen und/oder in einer anderen Reihenfolge als der vorstehend als Beispiel genannten Reihenfolge auftreten.

Bei manchen Beispielen ist das Verfahren nicht-invasiv bezüglich eines das Datenelement aufweisenden Codes, beispielsweise Programmcodes.
Bei manchen Beispielen weist das Verfahren auf: Ausschließen einer Verwendung eines Meta-Modells, beispielsweise Unterlassen einer Verwendung eines Meta-Modells, für wenigstens eines, beispielsweise alle, der folgenden Elemente: a) Ermitteln der ersten Informationen, oder b) Bereitstellen der ersten Informationen, oder c) Speichern der ersten Informationen, oder d) Senden der ersten Informationen, oder e) Senden des Datenelements, beispielsweise in Form eines Bytestroms, oder f) Empfangen des Datenelements, oder g) Empfangen von Informationen zur Interpretation wenigstens eines Teils des Datenelements, oder h) Auswerten des Datenelements, oder i) Interpretieren des Datenelements, oder j) Verarbeiten des Datenelements.

Manche Beispiele beziehen sich auf eine Vorrichtung zur Ausführung des Verfahrens gemäß der Offenbarung.

Bei manchen Beispielen ist die Vorrichtung z.B. zur Ausführung von Aspekten gemäß den Ansprüchen 1 bis 10 ausgebildet, aber beispielsweise nicht zur Ausführung von Aspekten gemäß den Ansprüchen 11 bis 12.

Bei manchen Beispielen ist die Vorrichtung z.B. zur Ausführung von Aspekten gemäß den Ansprüchen 11 bis 12 ausgebildet, aber beispielsweise nicht zur Ausführung von Aspekten gemäß den Ansprüchen 1 bis 10.

Bei manchen Beispielen ist die Vorrichtung z.B. zur Ausführung von Aspekten gemäß den Ansprüchen 1 bis 10 ausgebildet, und zur Ausführung von Aspekten gemäß den Ansprüchen 11 bis 12.

Manche Beispiele beziehen sich auf ein Erzeugnis, beispielsweise Steuergerät oder Fahrzeugcomputer oder Fahrzeug oder Messsystem, aufweisend wenigstens eine Vorrichtung gemäß der Offenbarung. Beispielsweise können Messdaten bei manchen Beispielen unter Verwendung des Prinzips gemäß der Offenbarung vergleichsweise effizient und beispielsweise mit vergleichsweise hoher Bandbreite aus einem Steuergerät oder Fahrzeugcomputer entnommen und z.B. an eine Diagnoseeinrichtung oder dergleichen übertragen werden, z.B. zur (ggf. weiteren) Auswertung.

Bei manchen Beispielen kann das Prinzip gemäß der Offenbarung z.B. auch für wenigstens eines der folgenden Elemente verwendet werden: a) Fernüberwachen und/oder Steuern von industriellen Prozessen, oder b) Erfassen und Analysieren von Messdaten, z.B. in Echtzeit, oder c) Parametrierung von Steuergeräten oder Fahrzeugcomputern oder eingebetteten Systemen, oder d) Unterhaltungselektronik, beispielsweise Streaming und/oder Gaming.

Manche Beispiele beziehen sich auf ein System, aufweisend wenigstens eine Vorrichtung gemäß der Offenbarung und ein Erzeugnis, beispielsweise Fahrzeug.

Manche Beispiele beziehen sich auf ein computerlesbares Speichermedium, umfassend Befehle, die bei der Ausführung durch einen Computer diesen veranlassen, das Verfahren gemäß der Offenbarung auszuführen.

Manche Beispiele beziehen sich auf ein Computerprogramm, umfassend Befehle, die bei der Ausführung des Programms durch einen Computer diesen veranlassen, das Verfahren gemäß der Offenbarung auszuführen.

Manche Beispiele beziehen sich auf ein Datenträgersignal, das das Computerprogramm gemäß der Offenbarung überträgt und/oder charakterisiert.

Manche Beispiele beziehen sich auf eine Verwendung des Verfahrens gemäß der Offenbarung und/oder der Vorrichtung gemäß der Offenbarung und/oder des Erzeugnisses gemäß der Offenbarung und/oder des computerlesbaren Speichermediums gemäß der Offenbarung und/oder des Computerprogramms gemäß der Offenbarung und/oder des Datenträgersignals gemäß der Offenbarung für wenigstens eines der folgenden Elemente: a) Serialisieren wenigstens einer Komponente des Datenelements, beispielsweise eines Objekts einer Klasse, oder b) serielles Übertragen, beispielsweise Senden oder Empfangen, von mit wenigstens einer Komponente des Datenelements assoziierten Informationen, beispielswese in Form eines Bytestroms, oder c) Übermitteln von Messdaten, beispielsweise bezüglich des Erzeugnisses, z.B. Fahrzeugs, oder d) Vermeiden eines Eingriffs in einen Programmcode, beispielsweise Quellcode, des Computerprogramms, oder e) Vermeiden einer Codegenerierung, z.B. für ein bzw. das Serialisieren, oder f) plattformunabhängiges Übertragen von Daten, beispielsweise von einem Erzeugnis bzw. einer mit dem Erzeugnis assoziierten Vorrichtung, beispielsweise zu einem weiteren Erzeugnis, beispielsweise Messsystem.

Weitere Merkmale, Anwendungsmöglichkeiten und Vorteile der Erfindung ergeben sich aus der nachfolgenden Beschreibung von Beispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Ansprüchen oder deren Rückbeziehung sowie unabhängig von ihrer Formulierung bzw. Darstellung in der Beschreibung bzw. in der Zeichnung.

In der Zeichnung zeigt:
- Fig. 1: schematisch ein vereinfachtes Blockdiagramm,
- Fig. 2: schematisch ein vereinfachtes Flussdiagramm,
- Fig. 3: schematisch ein vereinfachtes Flussdiagramm,
- Fig. 4: schematisch ein vereinfachtes Flussdiagramm,
- Fig. 5: schematisch ein vereinfachtes Flussdiagramm,
- Fig. 6: schematisch ein vereinfachtes Flussdiagramm,
- Fig. 7: schematisch ein vereinfachtes Blockdiagramm,
- Fig. 8: schematisch ein vereinfachtes Flussdiagramm,
- Fig. 9: schematisch ein vereinfachtes Flussdiagramm,
- Fig. 10: schematisch ein vereinfachtes Blockdiagramm,
- Fig. 11: schematisch ein vereinfachtes Blockdiagramm,
- Fig. 12: schematisch ein vereinfachtes Blockdiagramm,
- Fig. 13: schematisch ein vereinfachtes Blockdiagramm,
- Fig. 14: schematisch Aspekte von Verwendungen.

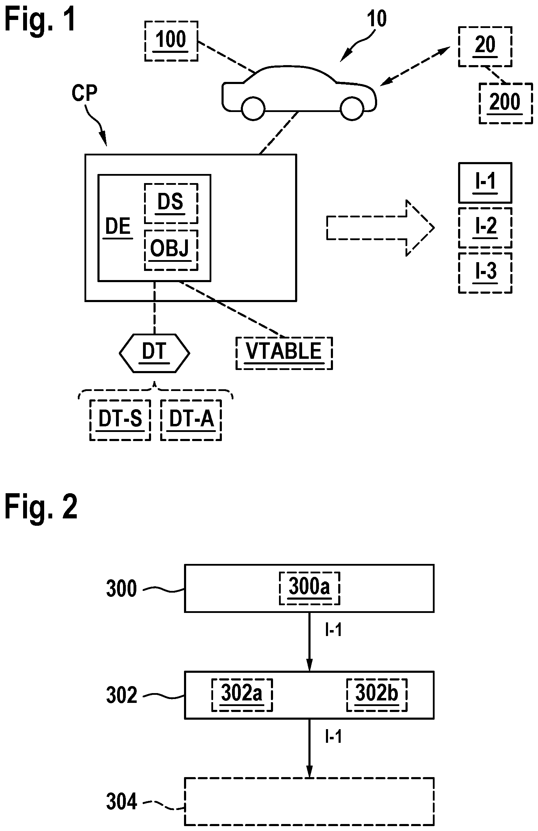

Manche Beispiele, s. Fig. 1, 2, beziehen sich auf ein Verfahren, beispielsweise ein computerimplementiertes Verfahren, zum Verarbeiten von mit einem Datenelement DE für ein Computerprogramm CP, beispielsweise für ein Erzeugnis wie z.B. ein Fahrzeug 10 (oder ein anderes Erzeugnis), assoziierten Daten, aufweisend: Ermitteln 300 (Fig. 2) erster Informationen I-1, die wenigstens eines der folgenden Elemente charakterisieren: a) Größe DT-S (Fig. 1) wenigstens eines mit dem Datenelement DE assoziierten, beispielsweise atomaren, Datentyps DT, oder b) Ausrichtung DT-A, beispielsweise alignment, wenigstens eines mit dem Datenelement DE assoziierten, beispielsweise atomaren, Datentyps DT, Bereitstellen 302 der ersten Informationen 1-1. Bei manchen Beispielen ermöglicht dies eine effiziente Serialisierung bzw. Vorbereitung einer Serialisierung von mit dem Datenelement DE bzw. dem Computerprogramm CP assoziierten Informationen.

Bei manchen Beispielen, Fig. 1, bezeichnet der Begriff "Serialisierung" einen Vorgang, bei dem Datenstrukturen DS oder Objekte OBJ in eine sequentielle Form gebracht werden, z.B. um sie für Speicherzwecke und/oder zur Übermittlung nutzbar zu machen. Bei manchen Beispielen ermöglicht eine Serialisierung z.B., auch vergleichsweise komplexe Datenstrukturen, wie sie z.B. in einem Steuergerät oder Fahrzeugrechner (z.B. vehicle computer) z.B. für das Kraftfahrzeug 10 auftreten können, in eine eindimensionale Darstellung zu konvertieren, die sich z.B. für die Archivierung und/oder Übertragung (z.B. zu einem Messsystem 20 für das Fahrzeug 10), z.B. über wenigstens ein Netzwerk oder eine direkte Datenverbindung, und/oder für das Abspeichern z.B. in einem vorgebbaren Dateiformat eignet.

Bei manchen Beispielen, Fig. 1, ist vorgesehen, dass das wenigstens eine Datenelement DE wenigstens eines der folgenden Elemente aufweist und/oder charakterisiert: a) eine Datenstruktur DS, oder b) ein Objekt OBJ, beispielsweise ein mit einer C++ - Klasse assoziiertes Objekt.

Bei manchen Beispielen, Fig. 2, ist vorgesehen, dass das Verfahren aufweist: Ermitteln 300a der ersten Informationen I-1 unter Verwendung eines Operators oder Makros eines Compilers, beispielsweise eines C++ - Compilers, mittels dem beispielsweise ein Quellcode für das Computerprogramm CP verarbeitbar, beispielsweise kompilierbar, ist. Bei manchen Beispielen kann beispielsweise eine "sizeof" Operator verwendet werden zur Ermittlung der Größe DT-S, und/oder ein "alignof' Operator zur Ermittlung der Ausrichtung DT-A.

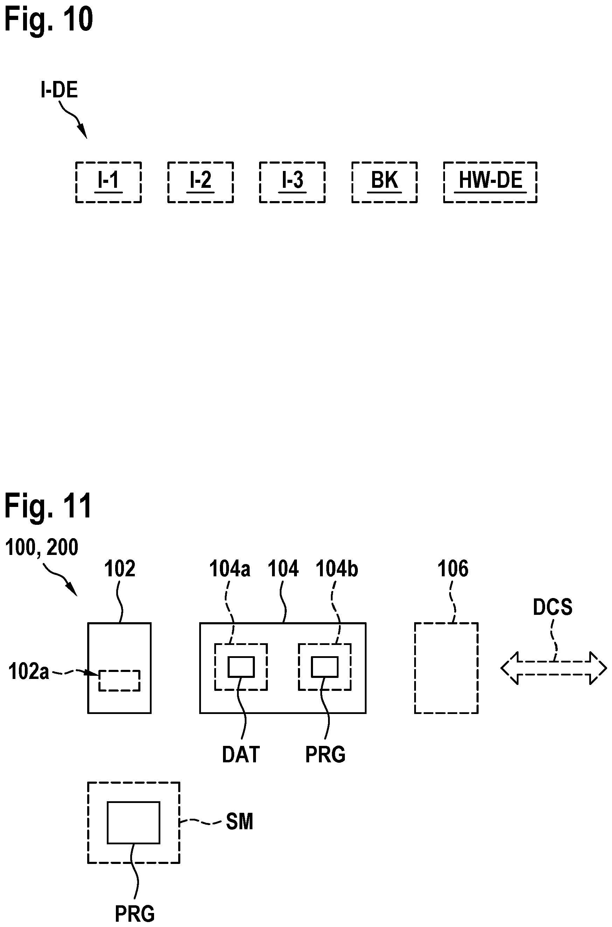

Bei manchen Beispielen, Fig. 2, weist das Bereitstellen 302 wenigstens eines der folgenden Elemente auf: a) Speichern 302a, beispielsweise lokales Speichern, der ersten Informationen I-1, beispielsweise in einem Speicher (104, s.u. zu Fig. 11) einer Vorrichtung 100 (Fig. 1), die zur Ausführung von Aspekten des Verfahrens gemäß den Beispielen ausgebildet ist, beispielsweise für eine zukünftige Verwendung 304 (z.B. durch die Vorrichtung 100 und/oder durch eine weitere Einrichtung 20), oder b) Senden 302b (Fig. 2) der ersten Informationen I-1 an wenigstens eine weitere Einrichtung 20.

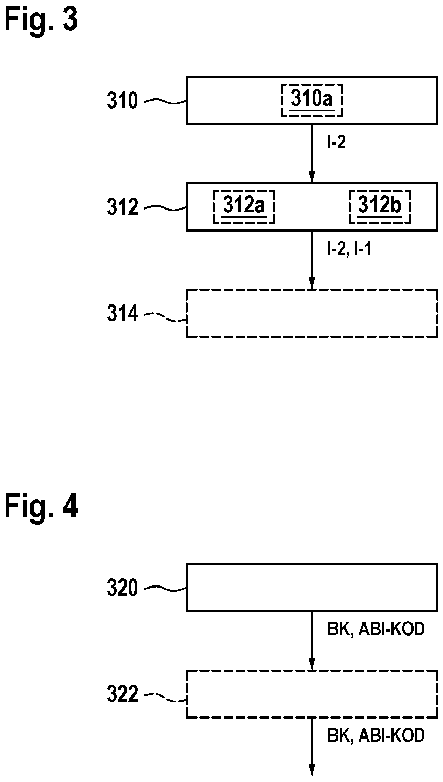

Bei manchen Beispielen, Fig. 3, weist das Verfahren auf: Ermitteln 310 zweiter Informationen I-2, die Aspekte einer mit dem Datenelement DE (Fig. 1) assoziierten virtuellen Tabelle VTABLE charakterisieren, beispielsweise mittels wenigstens eines "offsetof" Befehls, beispielsweise Makros, s. Block 310a, Bereitstellen 312 der zweiten Informationen I-2, beispielsweise gemeinsam mit den ersten Informationen I-1.

Bei manchen Beispielen, Fig. 3, weist das Bereitstellen 312 wenigstens eines der folgenden Elemente auf: a) Speichern 312a, beispielsweise lokales Speichern, der zweiten Informationen I-2 (z.B. analog zu dem Speichern 302a der ersten Informationen I-1), beispielsweise für eine zukünftige Verwendung 314, oder b) Senden 312b der zweiten Informationen I-2 an wenigstens eine weitere Einrichtung 20.

Bei manchen Beispielen, Fig. 4, weist das Verfahren auf: binäres Kodieren 320 wenigstens eines der folgenden Elemente: a) erste Informationen I-1, oder b) zweite Informationen I-2, zu einem Binärkode BK, beispielsweise einem application binary interface, ABI, Kode ABI-KOD, wobei beispielsweise der Binärkode BK, beispielsweise ABI Kode ABI-KOD, 32 bit lang ist, und, optional, Bereitstellen 322 (z.B. Speichern und/oder Senden), z.B. des Binärkodes BK, ABI-KOD.

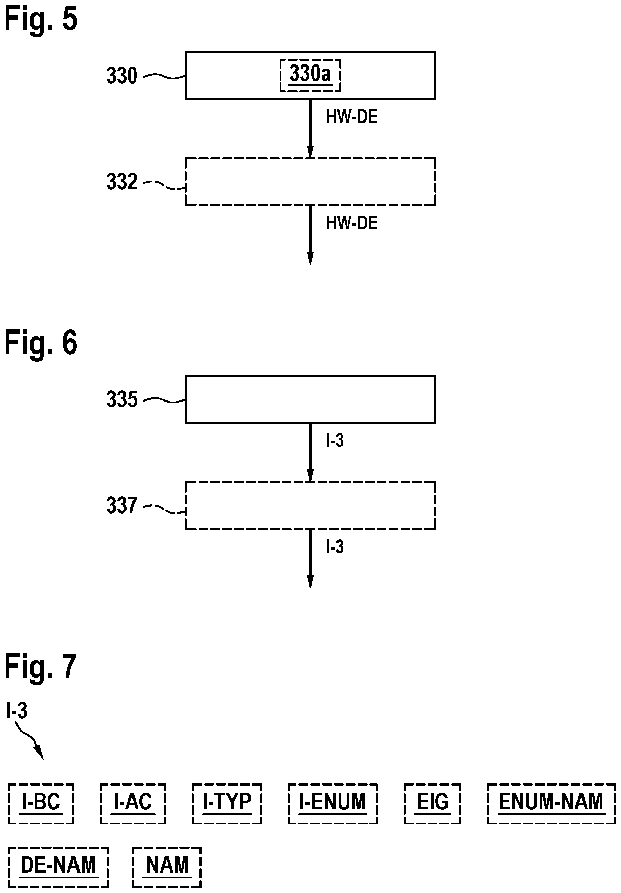

Bei manchen Beispielen, Fig. 5, weist das Verfahren auf: Ermitteln 330 eines Hashwerts HW-DE für das Datenelement DE, beispielsweise mittels einer MD5-Hashfunktion, wobei beispielsweise der Hashwert basierend auf wenigstens einem der folgenden Elemente gebildet wird, s. Block 330a: a) Member-Typen (z.B. wenigstens eines Klassenmitglieds einer Klasse des Datenelements DE), oder b) Member-Namen, oder c) Klassen-Name, oder d) Enumeration, e) sonstige Eigenschaften des Datenelements DE, die beispielsweise angeben, ob ein Datentyp ein Plain Old Data type, POD type, ist oder nicht, beispielsweise ob eine spezielle Ausrichtung mit dem Datentyp assoziiert ist, wobei beispielsweise der Hashwert HW-DE eine Länge von 16 Bytes aufweist.

Der optionale Block 332 von Fig. 5 symbolisiert eine optionale Verwendung des Hashwerts HW-DE, beispielsweise eine Übermittlung an die weitere Einrichtung 20, die bei manchen Beispielen basierend auf dem Hash-Wert beispielsweise eine Überprüfung ausführen kann, beispielsweise ein eindeutiges Identifizieren einer Klasse.

Bei manchen Beispielen, Fig. 6, 7, weist das Verfahren auf: Ermitteln 335 dritter Informationen I-3, die beispielsweise mit einer Struktur des Datenelements DE assoziiert sind, wobei die dritten Informationen I-3 wenigstens eines der folgenden Elemente aufweisen: a) Informationen I-BC über wenigstens eine Basisklasse, oder b) Informationen I-AC über aggregierte Klassen, oder c) Typinformationen I-TYP, oder d) Informationen I-ENUM über Aufzählungen, oder e) Eigenschaften EIG, beispielsweise assoziiert mit Zugriffsklassifikatoren wie z.B. "private", "public", usw., oder f) Bezeichner ENUM-NAM, beispielsweise Namen, von Aufzählungselementen, oder g) Bezeichner DE-NAM, beispielsweise Namen, wenigstens einer Komponente des Datenelements, oder h) Bezeichner NAM, beispielsweise Namen, von Elementen, beispielsweise Mitgliedern, des Datenelements DE. Bei manchen Beispielen können die dritten Informationen I-3 beispielsweise Aspekte einer sog. "Reflection" charakterisieren.

Der optionale Block 337 von Fig. 6 symbolisiert ein optionales Verwenden der dritten Informationen I-3, beispielsweise ein Senden an die weitere Einrichtung 20 (Fig. 1), beispielsweise, um die weitere Einrichtung 20 zu informieren über eine Struktur des Datenelements DE.

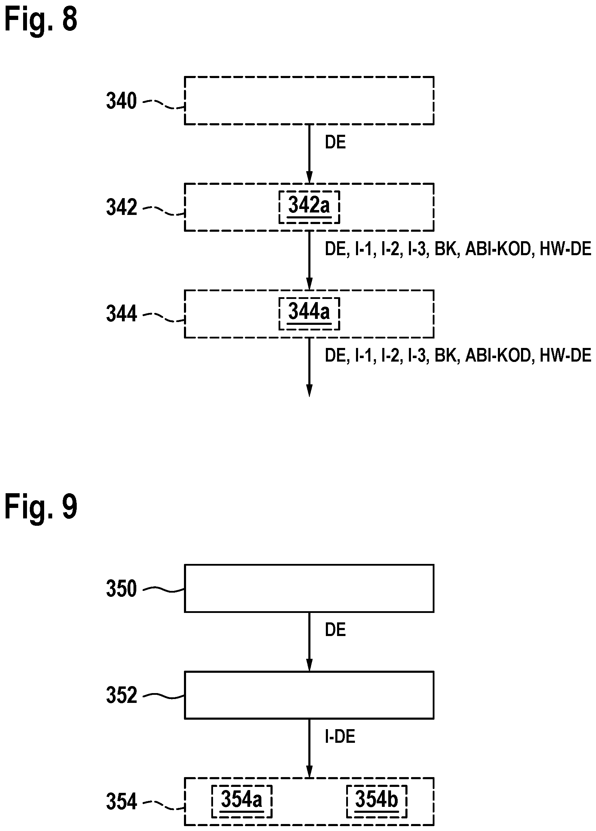

Bei manchen Beispielen, Fig. 8, weist das Verfahren wenigstens eines der folgenden Elemente auf: a) Lesen 340 des Datenelements DE, beispielsweise in Form eines byte blob, binary large object, z.B. aus einem Speicher 104 (s.u. zu Fig. 11), beispielsweise Arbeitsspeicher (104a, Fig. 11), beispielsweise einer mit dem Datenelement DE assoziierte Informationen verarbeitenden Vorrichtung 100, beispielsweise Recheneinrichtung 102 (Fig. 11), oder b) Kombinieren 342, beispielsweise Konkatenieren 342a, des Datenelements DE, mit wenigstens einem der folgenden Informationen: b1) erste Informationen I-1, oder b2) zweite Informationen I-2, oder b3) dritte Informationen I-3, oder b4) Binärkode BK, ABI-KOD oder b5) Hashwert HW-DE, oder c) Senden 344 des Datenelements DE, beispielsweise zusammen mit wenigstens einem der folgenden Informationen: c1) erste Informationen I-1, oder c2) zweite Informationen I-2, oder c3) dritte Informationen I-3, oder c4) Binärkode BK, ABI-KOD, oder c5) Hashwert HW_DE, beispielsweise Senden 344a in Form eines Bytestroms. Bei manchen Beispielen charakterisieren die ersten Informationen I-1 und/oder die zweiten Informationen I-2 und/oder die dritten Informationen I-3 und/oder der Binärkode BK, ABI-KOD und/oder der Hashwert HW-DE Informationen I-DE (s. z.B. auch Fig. 9), die zur Interpretation wenigstens eines Teils des Datenelements DE verwendbar sind. Auf diese Weise kann z.B. ein Empfänger 20 (Fig. 1) des Datenelements DE, z.B. in Form des byte blob, die durch das Datenelement DE charakterisierten Informationen auswerten, beispielsweise verarbeiten, beispielsweise plattformübergreifend, also z.B. auch dann, wenn das Datenelement DE mit einer ersten Plattform, beispielsweise Entwicklungsplattform für Programmcode PC, assoziiert ist, und der Empfänger 20 bzw. eine Vorrichtung 200 des Empfängers 20 mit einer zweiten Plattform, beispielsweise Entwicklungsplattform für Programmcode, assoziiert ist, die verschieden ist von der ersten Plattform.

Bei manchen Beispielen können zwei oder mehr der vorstehend genannten Aspekte a) Lesen 340 des Datenelements, b) Kombinieren 342, c) Senden 344 zeitlich auseinanderfallen und/oder in einer anderen Reihenfolge als der vorstehend als Beispiel genannten Reihenfolge auftreten.

Bei manchen Beispielen wird das Datenelement DE z.B. nicht mit den genannten Informationen I-1 und/oder I-2 und/oder I-3 bzw. Aspekten BK und/oder HW-ED kombiniert und/oder zusammen mit den genannten Informationen bzw. Aspekten gesendet. Bei manchen Beispielen kann ein Datenelement DE z.B. für sich an einen Empfänger 20 gesendet werden, z.B. ohne die genannten Informationen I-1 und/oder I-2 und/oder I-3 bzw. Aspekte BK und/oder HW-ED, und die genannten Informationen bzw. Aspekte können z.B. bereits vor dem Senden 342 des Datenelements DE an den Empfänger gesendet worden sein oder werden z.B. erst nach dem Senden 342 des Datenelements DE an den Empfänger 20 ihrerseits an den Empfänger 20 gesendet. Bei manchen Beispielen kann ein Zeitraum zwischen dem Senden des Datenelements an den Empfänger und dem Senden der genannten Informationen I-1 und/oder I-2 und/oder I-3 bzw. Aspekte BK und/oder HW-ED an den Empfänger oder umgekehrt beispielsweise einige Minuten oder Stunden betragen, oder mehrere Tage oder Monate.

Bei manchen Beispielen ist auch vorstellbar, dass zunächst, z.B. dann, wenn ein Computerprogramm verfügbar ist, die Informationen zur Interpretation wenigstens eines Teils des Datenelements DE an einen Empfänger 10 gesendet werden, damit der Empfänger 20 z.B. vorbereitet ist auf einen zukünftigen Empfang von Datenelementen DE, z.B. in serialisierter, z.B. blob-Form, und dass zu einem oder mehreren späteren Zeitpunkten jeweilige Datenelemente DE an den Empfänger 20 gesendet werden, z.B. in serialisierter, z.B. blob-Form. Da der Empfänger 20 bereits zuvor, also beispielsweise vor dem Empfang der z.B. serialisierten Datenelemente, die Informationen zur Interpretation des wenigstens einen Teils des Datenelements empfangen hat, kann er, beispielsweise effizient, beispielsweise bei Empfang, des Datenelements DE z.B. wenigstens einen Teil des Datenelements DE entsprechend interpretieren, beispielsweise Auswerten.

Bei manchen Beispielen sind Aspekte der Offenbarung beispielsweise nützlich für eine plattformunabhängige, effiziente Übertragung von Informationen, z.B. Messinformationen, z.B. bezüglich eines Steuergeräts oder Fahrzeugrechners, z.B. für ein Kraftfahrzeug. Bei manchen Beispielen können ein oder mehrere Datenelemente DE aufgrund der Serialisierung effizient, beispielsweise auch mit vergleichsweise großer Bandbreite, beispielsweise entsprechend einer Datenrate, mit der Daten für die Bildung der Datenelemente DE auftreten, übertragen werden, beispielsweise von einem Steuergerät oder Fahrzeugrechner zu einem Messsystem.

Manche Beispiele, Fig. 9, beziehen sich auf ein Verfahren, beispielsweise ein computerimplementiertes Verfahren, zum Verarbeiten von mit einem Datenelement DE (Fig. 1) für ein Computerprogramm, beispielsweise für ein Erzeugnis wie z.B. ein Fahrzeug 10, assoziierten Daten, aufweisend: Empfangen 350 des Datenelements DE, Empfangen 352 von Informationen I-DE zur Interpretation wenigstens eines Teils des Datenelements DE, und, optional, Auswerten 354, beispielsweise Interpretieren 354a oder Verarbeiten 354b, des Datenelements DE basierend wenigstens auf den Informationen I-DE. Bei manchen Beispielen ist das Verfahren beispielsweise für ein Messsystem bzw. für eine Vorrichtung für ein Messsystem verwendbar, das Datenelemente von wenigstens einem Erzeugnis 10, 100 gemäß der Offenbarung, beispielsweise in serialisierter Form, empfangen kann.

Bei manchen Beispielen, Fig. 10, charakterisieren die Informationen I-DE zur Interpretation des wenigstens einen Teils des Datenelements DE wenigstens eines der folgenden Elemente: a) erste Informationen I-1, charakterisierend eine Größe wenigstens eines mit dem Datenelement assoziierten, beispielsweise atomaren, Datentyps, oder eine Ausrichtung wenigstens eines mit dem Datenelement assoziierten, beispielsweise atomaren, Datentyps, oder b) zweite Informationen I-2, die Aspekte einer mit dem Datenelement assoziierten virtuellen Tabelle charakterisieren, oder c) dritte Informationen I-3, die beispielsweise mit einer Struktur des Datenelements assoziiert sind, oder d) einen Binärkode BK, beispielsweise einen application binary interface Kode ABI-KOD, der die ersten Informationen I-1 und/oder die zweiten Informationen I-2 charakterisiert, oder e) einen Hashwert HW-DE gebildet basierend auf wenigstens einem der folgenden Elemente: e1) Member-Typen, oder e2) Member-Namen, oder e3) Klassen-Name, oder e4) Enumeration, e5) sonstige Eigenschaften des Datenelements, die beispielsweise angeben, ob ein Datentyp ein Plain Old Data type, POD type, ist oder nicht, beispielsweise ob eine spezielle Ausrichtung mit dem Datentyp assoziiert ist.

Bei manchen Beispielen ist das Verfahren nicht-invasiv bezüglich eines das Datenelement DE aufweisenden Codes, beispielsweise Programmcodes.

Bei manchen Beispielen weist das Verfahren auf: Ausschließen einer Verwendung eines Meta-Modells, beispielsweise Unterlassen einer Verwendung eines Meta-Modells, für wenigstens eines, beispielsweise alle, der folgenden Elemente: a) Ermitteln 300 der ersten Informationen, oder b) Bereitstellen 302 der ersten Informationen, oder c) Speichern 302a der ersten Informationen, oder d) Senden 302b der ersten Informationen, oder e) Senden 344 des Datenelements, beispielsweise in Form eines Bytestroms (s. Element 344a von Fig. 8), oder f) Empfangen 350 des Datenelements, oder g) Empfangen 352 von Informationen zur Interpretation wenigstens eines Teils des Datenelements, oder h) Auswerten 354 des Datenelements, oder i) Interpretieren 354a des Datenelements, oder j) Verarbeiten 354b des Datenelements.

Manche Beispiele Fig. 1, 11, beziehen sich auf eine Vorrichtung 100, 200 zur Ausführung des Verfahrens gemäß der Offenbarung.

Bei manchen Beispielen, Fig. 1, 11, ist die Vorrichtung 100, 200 z.B. zur Ausführung von Aspekten gemäß den Ansprüchen 1 bis 10 ausgebildet, aber beispielsweise nicht zur Ausführung von Aspekten gemäß den Ansprüchen 11 bis 12.

Bei manchen Beispielen, Fig. 1, 11, ist die Vorrichtung 100, 200 z.B. zur Ausführung von Aspekten gemäß den Ansprüchen 11 bis 12 ausgebildet, aber beispielsweise nicht zur Ausführung von Aspekten gemäß den Ansprüchen 1 bis 10.

Bei manchen Beispielen, Fig. 1, 11, ist die Vorrichtung 100, 200 z.B. zur Ausführung von Aspekten gemäß den Ansprüchen 1 bis 10 ausgebildet, und zur Ausführung von Aspekten gemäß den Ansprüchen 11 bis 12.

Bei weiteren Beispielen, Fig. 11, ist vorgesehen, dass die Vorrichtung 100, 200 aufweist: eine wenigstens einen Rechenkern 102a aufweisende Recheneinrichtung ("Computer") 102, eine der Recheneinrichtung 102 zugeordnete Speichereinrichtung 104 zur zumindest zeitweisen Speicherung wenigstens eines der folgenden Elemente: a) Daten DAT, b) Computerprogramm PRG, beispielsweise zur Ausführung des Verfahrens gemäß den Ausführungsformen.

Bei manchen Beispielen charakterisieren die DAT wenigstens eines der folgenden Elemente bzw. sind die Daten DAT assoziiert mit wenigstens einem der folgenden Elemente: a) erste Informationen I-1, oder b) zweite Informationen I-2, oder c) dritte Informationen I-3, oder d) Binärkode BK, oder e) Hashwert HW-ED, oder f) Datenelement DE.

Bei weiteren Beispielen weist die Speichereinrichtung 104 einen flüchtigen Speicher (z.B. Arbeitsspeicher (RAM)) 104a auf, und/oder einen nichtflüchtigen (NVM-) Speicher (z.B. Flash-EEPROM) 104b, oder eine Kombination hieraus oder mit anderen, nicht explizit genannten Speichertypen.

Weitere Beispiele, Fig. 11, beziehen sich auf ein computerlesbares Speichermedium SM, umfassend Befehle PRG, die bei der Ausführung durch einen Computer 102 diesen veranlassen, das Verfahren gemäß den Ausführungsformen auszuführen.

Weitere Beispiele, Fig. 11, beziehen sich auf ein Computerprogramm PRG, umfassend Befehle, die bei der Ausführung des Programms PRG durch einen Computer 102 diesen veranlassen, das Verfahren gemäß den Ausführungsformen auszuführen.

Weitere Beispiele, Fig. 11, beziehen sich auf ein Datenträgersignal DCS, das das Computerprogramm PRG gemäß den Ausführungsformen charakterisiert und/oder überträgt. Das Datenträgersignal DCS ist beispielsweise über eine optionale Datenschnittstelle 106 der Vorrichtung 100 übertragbar (sendbar und/oder empfangbar). Bei manchen Beispielen sind z.B. auch die Datenelemente DE und/oder wenigstens manche der vorstehend genannten Informationen I-1 und/oder I-2 und/oder I-3 und/oder Aspekte BK und/oder HW-ED über die optionale Datenschnittstelle 106 übertragbar.

Manche Beispiele, Fig. 1, beziehen sich auf ein Erzeugnis, beispielsweise Steuergerät oder Fahrzeugcomputer oder Fahrzeug 10 oder Messsystem 20, aufweisend wenigstens eine Vorrichtung 100, 200 gemäß der Offenbarung.

Manche Beispiele, Fig. 1, beziehen sich auf ein System, aufweisend wenigstens eine Vorrichtung 100, 200 gemäß der Offenbarung und ein Erzeugnis 10, beispielsweise Fahrzeug.

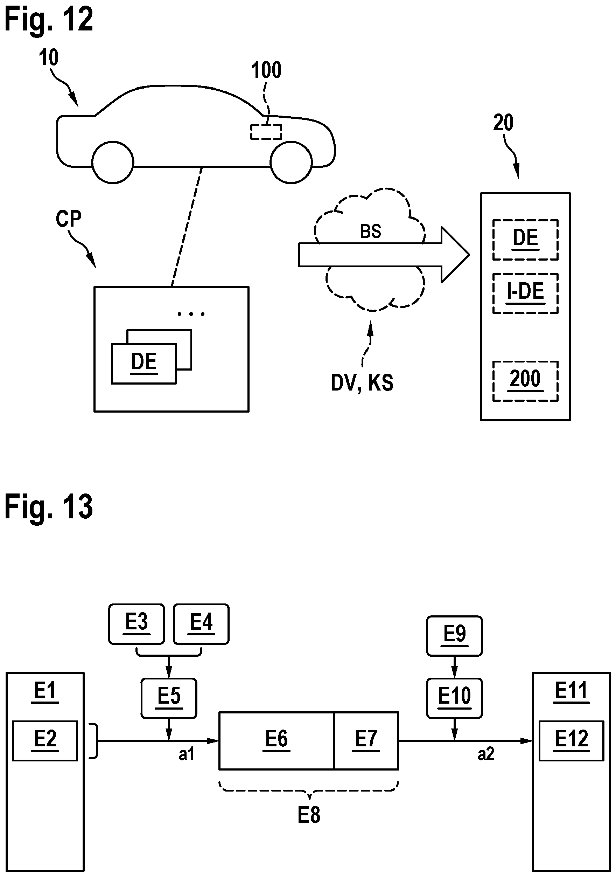

Fig. 12 zeigt schematisch ein vereinfachtes Blockdiagramm gemäß manchen Beispielen. Ein Kraftfahrzeug 10 weist ein Steuergerät 100 auf, das zur Ausführung von Aspekten gemäß der Offenbarung, z.B. entsprechend bzw. basierend auf Fig. 1 ff., ausgebildet ist. Das Steuergerät 100 ermittelt entsprechende Informationen I-DE für wenigstens ein Datenelement DE für ein Computerprogramm PC für das Kraftfahrzeug 10 und sendet die Informationen I-DE, z.B. zusammen mit dem wenigstens einen Datenelement DE, z.B. in Form eines Bytestroms BS, über eine Datenverbindung DV, beispielsweise realisierbar mittels eines Kommunikationssystems KS, an wenigstens eine weitere Einrichtung 20, beispielsweise ein Messsystem 20 zur Auswertung von Informationen des Datenelements.

Das wenigstens eine Datenelement DE kann beispielsweise ein oder mehrere Variablen, beispielsweise Messvariablen, und/oder andere Informationen von ein oder mehreren möglichen Datenquellen des Kraftfahrzeugs 10 aufweisen, die beispielsweise durch das Messsystem 20 ausgewertet oder überwacht werden sollen. Eine effiziente Übertragung des wenigstens einen Datenelements DE, z.B. in serialisierter Form, z.B. als Bytestrom BS, wird durch das Prinzip gemäß der Offenbarung ermöglicht.

Fig. 13 zeigt schematisch ein vereinfachtes Blockdiagramm gemäß manchen Beispielen. Element E1 symbolisiert einen Speicher, beispielsweise Arbeitsspeicher (RAM) einer ersten Vorrichtung, z.B. wenigstens ähnlich zu der Vorrichtung 100. Element E2 symbolisiert ein zumindest zeitweise in dem Arbeitsspeicher E1 gespeichertes Objekt. Element E3 symbolisiert einen ABI-Kode, z.B. wenigstens ähnlich zu dem Binärkode BK gemäß der Offenbarung, und Element E4 symbolisiert Reflection-Informationen, z.B. wenigstens ähnlich zu den dritten Informationen I-3 der Offenbarung. Element E5 symbolisiert einen Codec, der dazu ausgebildet ist, die Elemente E3, E4 mit dem Objekt E2 zu kombinieren und die mit den Elementen E2, E3, E4 assoziierten Informationen serialisiert, z.B. in Form eines Bytestroms E8, zu senden, s. auch den Pfeil a1, z.B. an einen Empfänger, z.B. wenigstens ähnlich zu der Vorrichtung 200 gemäß der Offenbarung.

Element E6 symbolisiert die serialisierten Informationen des Objekts E2, Element E7 symbolisiert die serialisierten Informationen E3 und/oder E4 bzw. einen Hashwert für Element E3. Beispielhaft kann Element E7 bei manchen Ausführungsformen als Kopfdaten, beispielsweise Header, für das Element E6 aufgefasst werden.

Element E9 symbolisiert Reflection-Informationen des Empfängers, Element E10 symbolisiert einen Codec, der dazu ausgebildet ist, eine Deserialisierung a2 bezüglich der Elemente E6, E7, E8 auszuführen. Element E11 symbolisiert einen Speicher, beispielsweise Arbeitsspeicher (RAM) einer zweiten Vorrichtung, z.B. wenigstens ähnlich zu der Vorrichtung 200, z.B. des Empfängers, und Element E12 symbolisiert das Objekt E2, wie es nach dem Empfang und der Deserialisierung in dem Speicher E11 zumindest zeitweise gespeichert ist.

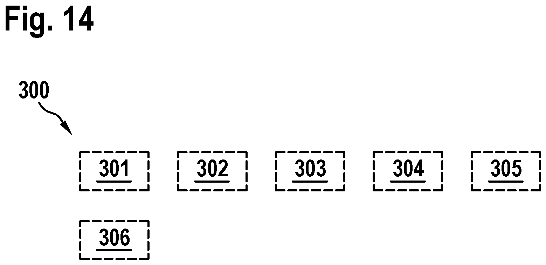

Manche Beispiele, Fig. 14, beziehen sich auf eine Verwendung 300 des Verfahrens gemäß der Offenbarung und/oder der Vorrichtung 100, 200 gemäß der Offenbarung und/oder des Erzeugnisses 10, 20 gemäß der Offenbarung und/oder des computerlesbaren Speichermediums SM gemäß der Offenbarung und/oder des Computerprogramms PRG gemäß der Offenbarung und/oder des Datenträgersignals DCS gemäß der Offenbarung für wenigstens eines der folgenden Elemente: a) Serialisieren 301 wenigstens einer Komponente des Datenelements DE, beispielsweise eines Objekts OBJ einer Klasse, oder b) serielles Übertragen 302, beispielsweise Senden oder Empfangen, von mit wenigstens einer Komponente des Datenelements DE assoziierten Informationen, beispielswese in Form eines Bytestroms BS, oder c) Übermitteln 303 von Messdaten, beispielsweise bezüglich des Erzeugnisses, z.B. Fahrzeugs, 10, oder d) Vermeiden 304 eines Eingriffs in einen Programmcode, beispielsweise Quellcode, des Computerprogramms, oder e) Vermeiden 305 einer Codegenerierung, z.B. für ein bzw. das Serialisieren, oder f) plattformunabhängiges Übertragen 306 von Daten, beispielsweise von einem Erzeugnis 10 bzw. einer mit dem Erzeugnis 10 assoziierten Vorrichtung 100, beispielsweise zu einem weiteren Erzeugnis, beispielsweise Messsystem, 20.

Nachfolgend sind weitere Beispiele, Aspekte und Vorteil des Prinzips gemäß der Offenbarung beschrieben, die bei manchen Beispielen zumindest zeitweise und/oder zumindest teilweise genutzt werden können bzw. vorhanden sind.
a) Es sind keine Anpassungen z.B. eines das Datenelement DE aufweisenden Codes, beispielsweise Programmcode, erforderlich. Das bedeutet, dass das Prinzip gemäß der Offenbarung nicht-invasiv bezüglich des Programmcodes ist.
b) Es ist kein Meta-Modell erforderlich, z.B. für eine Interpretation des, beispielsweise in Form eines Bytestroms, zu sendenden bzw. gesendeten Datenelements DE, beispielsweise zusammen mit wenigstens einem der folgenden Informationen: c1) erste Informationen, oder c2) zweite Informationen, oder c3) dritte Informationen, oder c4) Binärkode, oder c5) Hashwert, und demzufolge ist eine Auswertung bzw. des Meta-Modells bzw. ein sonstiger mit dem Meta-Modell einhergehender Aufwand entbehrlich.
c) Es ist kein Zwischendatenformat, z.B. intermediate data format, erforderlich, beispielsweise für das, beispielsweise in Form eines Bytestroms, zu sendende bzw. gesendete Datenelement DE, beispielsweise zusammen mit wenigstens einem der folgenden Informationen: c1) erste Informationen, oder c2) zweite Informationen, oder c3) dritte Informationen, oder c4) Binärkode, oder c5) Hashwert. Daher entfällt auch ein entsprechender Laufzeitmehraufwand, beispielsweise runtime overhead, beispielsweise gegenüber konventionellen Ansätzen, die ein Zwischendatenformat erfordern.
d) Das Prinzip gemäß der Offenbarung kann flexibel eingesetzt werden, z.B. auch für neue, beispielsweise bislang nicht bekannte, Datentypen, beispielsweise ohne, dass eine Anpassung an die neuen Datentypen erforderlich ist.

Bei manchen Beispielen ist besonders vorteilhaft a) das Prinzip gemäß der Offenbarung nicht-invasiv bezüglich des Programmcodes, und b) es ist kein Meta-Modell erforderlich, wodurch, z.B. gegenüber konventionellen Ansätzen, der jeweilige entsprechende Aufwand reduziert werden kann.

## Patentansprüche

1. Verfahren, beispielsweise computerimplementiertes Verfahren, zum Verarbeiten von mit einem Datenelement (DE) für ein Computerprogramm (CP), beispielsweise für ein Erzeugnis wie z.B. ein Fahrzeug (10), assoziierten Daten, aufweisend: Ermitteln (300) erster Informationen (I-1), die wenigstens eines der folgenden Elemente charakterisieren: a) Größe (DT-S) wenigstens eines mit dem Datenelement (DE) assoziierten, beispielsweise atomaren, Datentyps (DT), oder b) Ausrichtung (DT-A) wenigstens eines mit dem Datenelement (DE) assoziierten, beispielsweise atomaren, Datentyps (DT), Bereitstellen (302) der ersten Informationen (I-1).

2. Verfahren nach Anspruch 1, wobei das wenigstens eine Datenelement (DE) wenigstens eines der folgenden Elemente aufweist und/oder charakterisiert: a) eine Datenstruktur (DS), oder b) ein Objekt (OBJ).

3. Verfahren nach wenigstens einem der vorstehenden Ansprüche, aufweisend: Ermitteln (300a) der ersten Informationen (I-1) unter Verwendung eines Operators oder Makros eines Compilers.

4. Verfahren nach wenigstens einem der vorstehenden Ansprüche, wobei das Bereitstellen (302) wenigstens eines der folgenden Elemente aufweist: a) Speichern (302a) der ersten Informationen (I-1), beispielsweise für eine zukünftige Verwendung (304), oder b) Senden (302b) der ersten Informationen (I-1) an wenigstens eine weitere Einrichtung (20).

5. Verfahren nach wenigstens einem der vorstehenden Ansprüche, aufweisend: Ermitteln (310) zweiter Informationen (I-2), die Aspekte einer mit dem Datenelement (DE) assoziierten virtuellen Tabelle (VTABLE) charakterisieren, Bereitstellen (312) der zweiten Informationen (I-2), beispielsweise gemeinsam mit den ersten Informationen (I-1).

6. Verfahren nach Anspruch 5, wobei das Bereitstellen (312) wenigstens eines der folgenden Elemente aufweist: a) Speichern (312a) der zweiten Informationen (I-2), beispielsweise für eine zukünftige Verwendung (314), oder b) Senden (312b) der zweiten Informationen (I-2) an wenigstens eine weitere Einrichtung (20).

7. Verfahren nach wenigstens einem der vorstehenden Ansprüche, aufweisend: binäres Kodieren (320) wenigstens eines der folgenden Elemente: a) erste Informationen (I-1), oder b) zweite Informationen (I-2) zu einem Binärkode (BK), beispielsweise einem application binary interface Kode, (ABI-KOD), wobei beispielsweise der Binärkode (BK), beispielsweise application binary interface Kode, (ABI-KOD) 32 bit lang ist, und, optional, Bereitstellen (322) des Binärkodes (BK, ABI-KOD).

8. Verfahren nach wenigstens einem der vorstehenden Ansprüche, aufweisend: Ermitteln (330) eines Hashwerts (HW-DE) für das Datenelement (DE), beispielsweise mittels einer MD5-Hashfunktion, wobei beispielsweise der Hashwert (HW-DE) basierend auf wenigstens einem der folgenden Elemente gebildet wird (330a): a) Member-Typen, oder b) Member-Namen, oder c) Klassen-Name, oder d) Enumeration, e) sonstige Eigenschaften des Datenelements (DE), die beispielsweise angeben, ob ein Datentyp ein Plain Old Data type, POD type, ist oder nicht, beispielsweise ob eine spezielle Ausrichtung mit dem Datentyp assoziiert ist, wobei beispielsweise der Hashwert (HW-DE) eine Länge von 16 Bytes aufweist.

9. Verfahren nach wenigstens einem der vorstehenden Ansprüche, aufweisend: Ermitteln (335) dritter Informationen (I-3), die beispielsweise mit einer Struktur des Datenelements (DE) assoziiert sind, wobei die dritten Informationen (I-3) wenigstens eines der folgenden Elemente aufweisen: a) Informationen (I-BC) über wenigstens eine Basisklasse, oder b) Informationen (I-AC) über aggregierte Klassen, oder c) Typinformationen (I-TYP), oder d) Informationen (I-ENUM) über Aufzählungen, oder e) Eigenschaften (EIG), beispielsweise assoziiert mit Zugriffsklassifikatoren wie z.B. private, public, oder f) Bezeichner (ENUM-NAM), beispielsweise Namen, von Aufzählungselementen, oder g) Bezeichner (DE-NAM), beispielsweise Namen, wenigstens einer Komponente des Datenelements (DE), oder h) Bezeichner (NAM), beispielsweise Namen, von Elementen, beispielsweise Mitgliedern, des Datenelements (DE).

10. Verfahren nach wenigstens einem der vorstehenden Ansprüche, aufweisend wenigstens eines der folgenden Elemente: a) Lesen (340) des Datenelements (DE), beispielsweise in Form eines byte blob, binary large object, oder b) Kombinieren (342), beispielsweise Konkatenieren (342a), des Datenelements (DE), mit wenigstens einem der folgenden Informationen: b1) erste Informationen (I-1), oder b2) zweite Informationen (I-2), oder b3) dritte Informationen (I-3), oder b4) Binärkode (BK, ABI-KOD), oder b5) Hashwert (HW-DE), oder c) Senden (344) des Datenelements (DE), beispielsweise zusammen mit wenigstens einem der folgenden Informationen: c1) erste Informationen (I-1), oder c2) zweite Informationen (I-2), oder c3) dritte Informationen (I-3), oder c4) Binärkode (BK, ABI-KOD), oder c5) Hashwert (HW-DE), beispielsweise Senden (344a) in Form eines Bytestroms.

11. Verfahren, beispielsweise computerimplementiertes Verfahren, zum Verarbeiten von mit einem Datenelement (DE) für ein Computerprogramm (CP), beispielsweise für ein Erzeugnis wie z.B. ein Fahrzeug (10), assoziierten Daten, aufweisend: Empfangen (350) des Datenelements (DE), Empfangen (352) von Informationen (I-DE) zur Interpretation wenigstens eines Teils des Datenelements (DE), und, optional, Auswerten (354), beispielsweise Interpretieren (354a) oder Verarbeiten (354b), des Datenelements (DE) basierend wenigstens auf den Informationen (I-DE).

12. Verfahren nach Anspruch 11, wobei die Informationen (I-DE) zur Interpretation des wenigstens einen Teils des Datenelements (DE) wenigstens eines der folgenden Elemente charakterisieren: a) erste Informationen (I-1), charakterisierend eine Größe (DT-S) wenigstens eines mit dem Datenelement (DE) assoziierten, beispielsweise atomaren, Datentyps (DT), oder eine Ausrichtung (DT-A) wenigstens eines mit dem Datenelement (DE) assoziierten, beispielsweise atomaren, Datentyps (DT), oder b) zweite Informationen (I-2), die Aspekte einer mit dem Datenelement (DE) assoziierten virtuellen Tabelle (VTABLE) charakterisieren, oder c) dritte Informationen (I-3), die beispielsweise mit einer Struktur des Datenelements (DE) assoziiert sind, oder d) einen Binärkode (BK), beispielsweise einen application binary interface Kode, (ABI-KOD), der die ersten Informationen (I-1) und/oder die zweiten Informationen (I-2) charakterisiert, oder e) einen Hashwert (HW-DE) gebildet (330a) basierend auf wenigstens einem der folgenden Elemente: e1) Member-Typen, oder e2) Member-Namen, oder e3) Klassen-Name, oder e4) Enumeration, e5) sonstige Eigenschaften des Datenelements (DE), die beispielsweise angeben, ob ein Datentyp ein Plain Old Data type, POD type, ist oder nicht, beispielsweise ob eine spezielle Ausrichtung mit dem Datentyp assoziiert ist.

13. Verfahren nach wenigstens einem der vorstehenden Ansprüche, wobei das Verfahren nicht-invasiv bezüglich eines das Datenelement aufweisenden Codes, beispielsweise Programmcodes, ist.

14. Verfahren nach wenigstens einem der vorstehenden Ansprüche, aufweisend: Ausschließen einer Verwendung eines Meta-Modells, beispielsweise Unterlassen einer Verwendung eines Meta-Modells, für wenigstens eines, beispielsweise alle, der folgenden Elemente: a) Ermitteln (300), oder b) Bereitstellen (302), oder c) Speichern (302a), oder d) Senden (302b), oder e) Senden (344; 344a), oder f) Empfangen (350), oder g) Empfangen (352), oder h) Auswerten (354), oder i) Interpretieren (354a), oder j) Verarbeiten (354b).

15. Vorrichtung (100; 200) zur Ausführung des Verfahrens nach wenigstens einem der vorstehenden Ansprüche.

16. Erzeugnis, beispielsweise Steuergerät oder Fahrzeugcomputer oder Fahrzeug (10) oder Messsystem (20), aufweisend wenigstens eine Vorrichtung (100; 200) nach Anspruch 15.

17. Computerlesbares Speichermedium (SM), umfassend Befehle (PRG), die bei der Ausführung durch einen Computer (102) diesen veranlassen, das Verfahren nach wenigstens einem der Ansprüche 1 bis 14 auszuführen.

18. Computerprogramm (PRG), umfassend Befehle, die bei der Ausführung des Programms (PRG) durch einen Computer (102) diesen veranlassen, das Verfahren nach wenigstens einem der Ansprüche 1 bis 14 auszuführen.

19. Datenträgersignal (DCS), das das Computerprogramm (PRG) nach Anspruch 18 überträgt und/oder charakterisiert.

20. Verwendung (300) des Verfahrens nach wenigstens einem der Ansprüche 1 bis 14 und/oder der Vorrichtung (100) nach Anspruch 15 und/oder des Erzeugnisses nach Anspruch 16 und/oder des computerlesbaren Speichermediums (SM) nach Anspruch 17 und/oder des Computerprogramms (PRG) nach Anspruch 18 und/oder des Datenträgersignals (DCS) nach Anspruch 19 für wenigstens eines der folgenden Elemente: a) Serialisieren (301) wenigstens einer Komponente des Datenelements (DE), beispielsweise eines Objekts einer Klasse, oder b) serielles Übertragen (302), beispielsweise Senden oder Empfangen, von mit wenigstens einer Komponente des Datenelements (DE) assoziierten Informationen, beispielsweise in Form eines Bytestroms (BS), oder c) Übermitteln (303) von Messdaten, beispielsweise bezüglich des Erzeugnisses, z.B. Fahrzeugs (10), oder d) Vermeiden (304) eines Eingriffs in einen Programmcode, beispielsweise Quellcode, des Computerprogramms (CP), oder e) Vermeiden (305) einer Codegenerierung, z.B. für ein bzw. das Serialisieren (301), oder f) plattformunabhängiges Übertragen (306) von Daten, beispielsweise von einem Erzeugnis (10) bzw. einer mit dem Erzeugnis (10) assoziierten Vorrichtung (100), beispielsweise zu einem weiteren Erzeugnis, beispielsweise Messsystem (20).

## Geänderte Patentansprüche

### Geänderte Patentansprüche gemäss Regel 137(2) EPÜ.

1. Computerimplementiertes Verfahren, zum Verarbeiten von mit einem Datenelement (DE) für ein Computerprogramm (CP) für ein Erzeugnis wie z.B. ein Fahrzeug (10) assoziierten Daten, aufweisend: Ermitteln (300) erster Informationen (I-1), die a) eine Größe (DT-S) wenigstens eines mit dem Datenelement (DE) assoziierten, beispielsweise atomaren, Datentyps (DT), und b) eine Ausrichtung (DT-A) des wenigstens einen mit dem Datenelement (DE) assoziierten, beispielsweise atomaren, Datentyps (DT) charakterisieren, Bereitstellen (302) der ersten Informationen (I-1), Senden (344) des Datenelements (DE) zusammen mit den ersten Informationen (I-1).

2. Verfahren nach Anspruch 1, wobei das wenigstens eine Datenelement (DE) wenigstens eines der folgenden Elemente aufweist und/oder charakterisiert: a) eine Datenstruktur (DS), oder b) ein Objekt (OBJ).

3. Verfahren nach wenigstens einem der vorstehenden Ansprüche, aufweisend: Ermitteln (300a) der ersten Informationen (I-1) unter Verwendung eines Operators oder Makros eines Compilers.

4. Verfahren nach wenigstens einem der vorstehenden Ansprüche, wobei das Bereitstellen (302) wenigstens eines der folgenden Elemente aufweist: a) Speichern (302a) der ersten Informationen (I-1), beispielsweise für eine zukünftige Verwendung (304), oder b) Senden (302b) der ersten Informationen (I-1) an wenigstens eine weitere Einrichtung (20).

5. Verfahren nach wenigstens einem der vorstehenden Ansprüche, aufweisend: Ermitteln (310) zweiter Informationen (I-2), die Aspekte einer mit dem Datenelement (DE) assoziierten virtuellen Tabelle (VTABLE) charakterisieren, Bereitstellen (312) der zweiten Informationen (I-2), beispielsweise gemeinsam mit den ersten Informationen (I-1).

6. Verfahren nach Anspruch 5, wobei das Bereitstellen (312) wenigstens eines der folgenden Elemente aufweist: a) Speichern (312a) der zweiten Informationen (I-2), beispielsweise für eine zukünftige Verwendung (314), oder b) Senden (312b) der zweiten Informationen (I-2) an wenigstens eine weitere Einrichtung (20).

7. Verfahren nach wenigstens einem der vorstehenden Ansprüche, aufweisend: binäres Kodieren (320) wenigstens eines der folgenden Elemente: a) erste Informationen (I-1), oder b) zweite Informationen (I-2) zu einem Binärkode (BK), beispielsweise einem application binary interface Kode, (ABI-KOD), wobei beispielsweise der Binärkode (BK), beispielsweise application binary interface Kode, (ABI-KOD) 32 bit lang ist, und, optional, Bereitstellen (322) des Binärkodes (BK, ABI-KOD).

8. Verfahren nach wenigstens einem der vorstehenden Ansprüche, aufweisend: Ermitteln (330) eines Hashwerts (HW-DE) für das Datenelement (DE), beispielsweise mittels einer MD5-Hashfunktion, wobei beispielsweise der Hashwert (HW-DE) basierend auf wenigstens einem der folgenden Elemente gebildet wird (330a): a) Member-Typen, oder b) Member-Namen, oder c) Klassen-Name, oder d) Enumeration, e) sonstige Eigenschaften des Datenelements (DE), die beispielsweise angeben, ob ein Datentyp ein Plain Old Data type, POD type, ist oder nicht, beispielsweise ob eine spezielle Ausrichtung mit dem Datentyp assoziiert ist, wobei beispielsweise der Hashwert (HW-DE) eine Länge von 16 Bytes aufweist.

9. Verfahren nach wenigstens einem der vorstehenden Ansprüche, aufweisend: Ermitteln (335) dritter Informationen (I-3), die beispielsweise mit einer Struktur des Datenelements (DE) assoziiert sind, wobei die dritten Informationen (I-3) wenigstens eines der folgenden Elemente aufweisen: a) Informationen (I-BC) über wenigstens eine Basisklasse, oder b) Informationen (I-AC) über aggregierte Klassen, oder c) Typinformationen (I-TYP), oder d) Informationen (I-ENUM) über Aufzählungen, oder e) Eigenschaften (EIG), beispielsweise assoziiert mit Zugriffsklassifikatoren wie z.B. private, public, oder f) Bezeichner (ENUM-NAM), beispielsweise Namen, von Aufzählungselementen, oder g) Bezeichner (DE-NAM), beispielsweise Namen, wenigstens einer Komponente des Datenelements (DE), oder h) Bezeichner (NAM), beispielsweise Namen, von Elementen, beispielsweise Mitgliedern, des Datenelements (DE).

10. Verfahren nach wenigstens einem der vorstehenden Ansprüche, aufweisend wenigstens eines der folgenden Elemente: a) Lesen (340) des Datenelements (DE), beispielsweise in Form eines byte blob, binary large object, oder b) Kombinieren (342), beispielsweise Konkatenieren (342a), des Datenelements (DE), mit wenigstens einem der folgenden Informationen: b1) erste Informationen (I-1), oder b2) zweite Informationen (I-2), oder b3) dritte Informationen (I-3), oder b4) Binärkode (BK, ABI-KOD), oder b5) Hashwert (HW-DE), oder c) Senden (344) des Datenelements (DE), beispielsweise zusammen mit wenigstens einem der folgenden Informationen: c1) erste Informationen (I-1), oder c2) zweite Informationen (I-2), oder c3) dritte Informationen (I-3), oder c4) Binärkode (BK, ABI-KOD), oder c5) Hashwert (HW-DE), beispielsweise Senden (344a) in Form eines Bytestroms.

11. Verfahren, beispielsweise computerimplementiertes Verfahren, zum Verarbeiten von mit einem Datenelement (DE) für ein Computerprogramm (CP)für ein Erzeugnis wie z.B. ein Fahrzeug (10) assoziierten Daten, aufweisend: Empfangen (350) des Datenelements (DE), Empfangen (352) von Informationen (I-DE) zur Interpretation wenigstens eines Teils des Datenelements (DE), wobei die Informationen (I-DE) zur Interpretation des wenigstens einen Teils des Datenelements (DE) erste Informationen (I-1) charakterisieren, die eine Größe (DT-S) wenigstens eines mit dem Datenelement (DE) assoziierten, beispielsweise atomaren, Datentyps (DT), und eine Ausrichtung (DT-A) des wenigstens einen mit dem Datenelement (DE) assoziierten, beispielsweise atomaren, Datentyps (DT) charakterisieren, und, optional, Auswerten (354), beispielsweise Interpretieren (354a) oder Verarbeiten (354b), des Datenelements (DE) basierend wenigstens auf den Informationen (I-DE).

12. Verfahren nach Anspruch 11, wobei die Informationen (I-DE) zur Interpretation des wenigstens einen Teils des Datenelements (DE) weiter wenigstens eines der folgenden Elemente charakterisieren: , b) zweite Informationen (I-2), die Aspekte einer mit dem Datenelement (DE) assoziierten virtuellen Tabelle (VTABLE) charakterisieren, oder c) dritte Informationen (I-3), die beispielsweise mit einer Struktur des Datenelements (DE) assoziiert sind, oder d) einen Binärkode (BK), beispielsweise einen application binary interface Kode, (ABI-KOD), der die ersten Informationen (I-1) und/oder die zweiten Informationen (I-2) charakterisiert, oder e) einen Hashwert (HW-DE) gebildet (330a) basierend auf wenigstens einem der folgenden Elemente: e1) Member-Typen, oder e2) Member-Namen, oder e3) Klassen-Name, oder e4) Enumeration, e5) sonstige Eigenschaften des Datenelements (DE), die beispielsweise angeben, ob ein Datentyp ein Plain Old Data type, POD type, ist oder nicht, beispielsweise ob eine spezielle Ausrichtung mit dem Datentyp assoziiert ist.

13. Verfahren nach wenigstens einem der vorstehenden Ansprüche, wobei das Verfahren nicht-invasiv bezüglich eines das Datenelement aufweisenden Codes, beispielsweise Programmcodes, ist.

14. Verfahren nach wenigstens einem der vorstehenden Ansprüche, aufweisend: Ausschließen einer Verwendung eines Meta-Modells, beispielsweise Unterlassen einer Verwendung eines Meta-Modells, für wenigstens eines, beispielsweise alle, der folgenden Elemente: a) Ermitteln (300), oder b) Bereitstellen (302), oder c) Speichern (302a), oder d) Senden (302b), oder e) Senden (344; 344a), oder f) Empfangen (350), oder g) Empfangen (352), oder h) Auswerten (354), oder i) Interpretieren (354a), oder j) Verarbeiten (354b).

15. Vorrichtung (100; 200) zur Ausführung des Verfahrens nach wenigstens einem der vorstehenden Ansprüche.

16. Erzeugnis, beispielsweise Steuergerät oder Fahrzeugcomputer oder Fahrzeug (10) oder Messsystem (20), aufweisend wenigstens eine Vorrichtung (100; 200) nach Anspruch 15.

17. Computerlesbares Speichermedium (SM), umfassend Befehle (PRG), die bei der Ausführung durch einen Computer (102) diesen veranlassen, das Verfahren nach wenigstens einem der Ansprüche 1 bis 14 auszuführen.

18. Computerprogramm (PRG), umfassend Befehle, die bei der Ausführung des Programms (PRG) durch einen Computer (102) diesen veranlassen, das Verfahren nach wenigstens einem der Ansprüche 1 bis 14 auszuführen.

19. Datenträgersignal (DCS), das das Computerprogramm (PRG) nach Anspruch 18 überträgt und/oder charakterisiert.

20. Verwendung (300) des Verfahrens nach wenigstens einem der Ansprüche 1 bis 14 und/oder der Vorrichtung (100) nach Anspruch 15 und/oder des Erzeugnisses nach Anspruch 16 und/oder des computerlesbaren Speichermediums (SM) nach Anspruch 17 und/oder des Computerprogramms (PRG) nach Anspruch 18 und/oder des Datenträgersignals (DCS) nach Anspruch 19 für wenigstens eines der folgenden Elemente: a) Serialisieren (301) wenigstens einer Komponente des Datenelements (DE), beispielsweise eines Objekts einer Klasse, oder b) serielles Übertragen (302), beispielsweise Senden oder Empfangen, von mit wenigstens einer Komponente des Datenelements (DE) assoziierten Informationen, beispielsweise in Form eines Bytestroms (BS), oder c) Übermitteln (303) von Messdaten, beispielsweise bezüglich des Erzeugnisses, z.B. Fahrzeugs (10), oder d) Vermeiden (304) eines Eingriffs in einen Programmcode, beispielsweise Quellcode, des Computerprogramms (CP), oder e) Vermeiden (305) einer Codegenerierung, z.B. für ein bzw. das Serialisieren (301), oder f) plattformunabhängiges Übertragen (306) von Daten, beispielsweise von einem Erzeugnis (10) bzw. einer mit dem Erzeugnis (10) assoziierten Vorrichtung (100), beispielsweise zu einem weiteren Erzeugnis, beispielsweise Messsystem (20).
